# EUROPEAN PATENT SPECIFICATION

(11) **EP 4 205 212 B1**
(45) Date of publication and mention of the grant of the patent: **29.01.2025**
(21) Application number: 21769703.6
(22) Date of filing: 27.08.2021
(51) Int. Cl.: H01M 10/04, H01M 50/342, H01M 50/383, H01M 50/505, H01M 50/512, H01M 50/213, H01M 50/249

(54) **BATTERY MODULE**
BATTERIEMODUL
MODULE DE BATTERIE

(30) Priority: 27.08.2020 GB 202013445; 27.08.2020 GB 202013458; 27.08.2020 GB 202013461; 16.10.2020 GB 202016430
(43) Date of publication of application: 05.07.2023
(73) Proprietor: Jaguar Land Rover Limited, Coventry, Warwickshire CV3 4LF (GB)
(72) Inventor: BUSH, Andrew, Coventry Warwickshire CV3 4LF (GB)
(74) Representative: Jaguar Land Rover Patents Department
(86) International application number: PCT/EP2021/073734
(87) International publication number: WO 2022/043492

(56) References cited:
- EP-A1- 3 675 210
- CN-A- 104 362 399
- CN-A- 110 071 245
- US-A1- 2015 221 914
- US-A1- 2019 140 233

## Description

### TECHNICAL FIELD

Aspects of the invention relate to a battery module, a battery pack and to a vehicle, particularly, but not exclusively to electric or hybrid electric vehicles and battery modules therefor.

### BACKGROUND

There has recently been increased interest in providing battery-powered vehicles, which has led to developments in vehicle battery, in particular vehicle traction battery, technology. It is generally desirable for vehicle batteries to provide high energy capacity and peak current output, whilst minimising the size and weight of the battery module and thus the vehicle.

It is important to ensure that vehicle safety is not compromised in the event of a vehicle battery being damaged. Indeed, some regulatory tests require that batteries used in automotive vehicles must not cause an uncontrolled exothermal reaction affecting all of the cells after damage to one cell within a battery module, or at least that any such reaction is sufficiently slow to allow the vehicle occupants time to escape the vehicle.

CN110071245A, US2015/221914A1, EP3675210A1, CN104362399B and US2019/140233A1 are example or prior art modules.

It is desirable to provide vehicle battery modules capable of providing improved energy and/or current density, whilst maintaining adequate cooling performance and avoiding the possibility of thermal runaway.

It is an object of embodiments of the invention to at least mitigate one or more of the problems of the prior art.

### SUMMARY OF THE INVENTION

According to an aspect of the invention for which protection is sought, there is provided a battery module comprising:
a plurality of cylindrical cells, each of the cylindrical cells having a vent means located at a first end of the cylindrical cell, wherein the first ends of at least some of the cylindrical cells are substantially coplanar;
a busbar assembly, wherein at least a portion of the busbar assembly is located adjacent to the coplanar first ends of the cylindrical cells and wherein the portion of the busbar assembly adjacent to the coplanar first ends comprises a collection plate having one or more apertures or voids;
a plurality of discrete portions of a non-combustible compound, at least some of the portions each being located within a respective one of the apertures or voids and adjacent to the first end of at least one of the cylindrical cells; and
a pad located adjacent to the busbar assembly, wherein the pad at least partially covers the apertures or voids. Advantageously, this provides effective protection against vent gases emitted by one of the cells within the battery module damaging the other cells within the module. Furthermore, the venting protection provided by this aspect only adds a small amount to the overall weight and dimensions of the battery module. The compound may be a flexible sealing compound and/or a caulking compound. For example, the compound may be a silicone-based compound. Within the scope of the present specification, a collection plate is considered to be a component of a busbar assembly which is electrically connected to a plurality of cells such that current from the cells passes through the collection plate.

The non-combustible compound may alternatively be referred to as a non-combustible potting material.

Optionally, the pad is a heat-resistant pad. For example, the pad may have a thermal conductivity of less than 0.15W/m K, preferably less than 0.1W/m K.

In an embodiment the pad comprises a plurality of weakened regions, preferably, the plurality of weakened regions are substantially aligned with the apertures. Advantageously, this places the weakened regions in the path of any vent gases that are ejected, thereby helping to avoid blocking the vent gases from exiting the cell.

Optionally, the pad is formed from mica, silicone or glass.

In an embodiment the non-combustible compound comprises a silicone-based compound. The non-combustible compound may be curing or non-curing. Optionally, the non-combustible compound comprises an intumescent compound.

In an embodiment, wherein the busbar assembly comprises a respective aperture adjacent to each of the cylindrical cells,
wherein a respective cavity is defined by each aperture and the first end of the adjacent cell or a second end of the adjacent cell,
wherein the portions of non-combustible compound are located in the cavities and the pad substantially covers the cavities.

In an embodiment, each portion of the non-combustible compound is in contact with one of the cylindrical cells and with the pad, whereby the portions of compound at least partially secure the pad to the cylindrical cells.

According to another aspect of the invention for which protection is sought there is provided a battery pack comprising a plurality of modules as described above.

According to another aspect of the invention for which protection is sought there is provided a vehicle comprising a battery module or a battery pack as described above.

According to another aspect of the invention for which protection is sought there is provided a method of manufacture of a battery module comprising:
providing a plurality of cylindrical cells, each having a vent means located at a first end thereof, arranged such that the first ends of at least some of the cylindrical cells are substantially coplanar;
connecting a busbar assembly to the plurality of cylindrical cells, wherein at least a portion of the busbar assembly is located adjacent to the coplanar first ends of the cylindrical cells and wherein the portion of the busbar assembly adjacent to the coplanar first ends comprises a collection plate having one or more apertures or voids;
positioning a plurality of discrete portions of non-combustible compound into the apertures or voids, at least some of the portions each being located adjacent to a respective first end of one of the cylindrical cells; and
positioning a pad adjacent to the busbar assembly, wherein the pad at least partially covers the apertures or voids.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Embodiments of the invention will now be described by way of example only, with reference to the accompanying figures, in which:
Figures 1A-C show different views of a cylindrical cell (PRIOR ART);
Figure 2 shows a battery module in an embodiment of the present invention;
Figure 3 shows a cross section through a battery module in another embodiment of the present invention;
Figure 4 shows a battery module in another embodiment of the present invention;
Figure 5 shows a flow chart illustrating a method of manufacture of a battery module in an embodiment of the present invention; and
Figure 6 shows a vehicle in an embodiment of the present invention.

### DETAILED DESCRIPTION

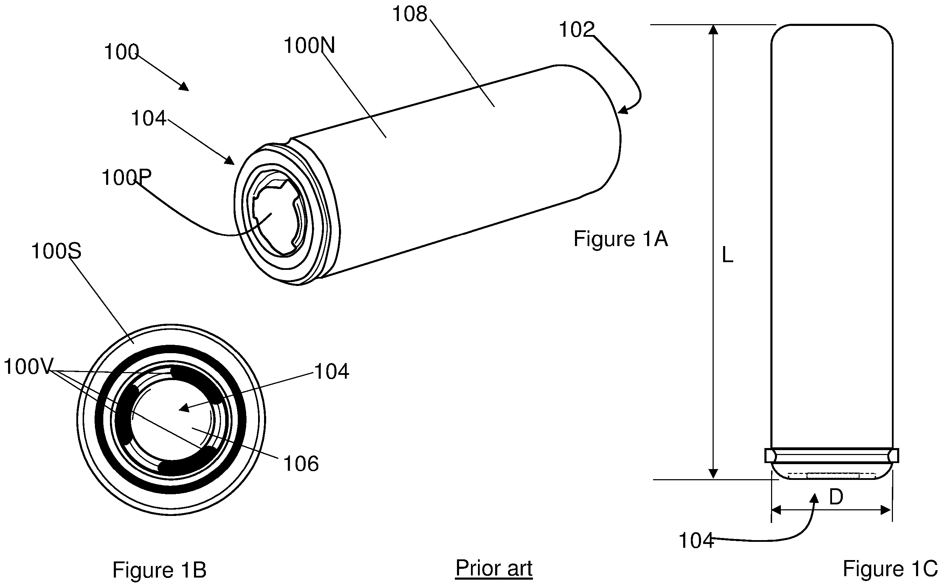

Figures 1A-C show different views of a conventional cylindrical cell 100. Cylindrical cells 100 are widely available in a variety of different sizes. For example, in traction batteries for vehicles cells having a diameter D of 21mm and a length L of 70mm are often used. Such cells are typically referred to as 21700 cells (the first two numbers referring to the diameter D, in mm, and the last three numbers referring to the length L, in tenths of mm). However, it will be understood that other sizes of cell may also be used in embodiments of the present invention.

As will be well understood by the skilled person, the cell 100 comprises a positive terminal 100P, a negative terminal 100N, and vent means 100V. The positive terminal is provided by a steel end cap 106 in a central region of the first end 104 of the cell, and the negative terminal is provided by a steel cylindrical case 108. The steel cylindrical case 108 covers the second end 102, the entire cylindrical surface between the first and second ends, and a peripheral region 100S of the first end surface. The peripheral region of the first end surface may also be referred to as a "shoulder" region 100S of the first end surface 104. In commercially-available cells, the end cap that defines the positive terminal 100P on the first end surface 104 sometimes protrudes beyond the shoulder region 100S of the first end surface, although this is not the case in the cell shown in figure 1. The positive terminal protruding beyond the shoulder region 100S allows a substantially planar connector to be connected to the positive terminal and not the negative terminal. As will be well understood by the skilled person, it is important to avoid direct electrical connections between the positive and negative terminals, as such connections create a short circuit which may damage the cell.

As shown in figure 1, the cell 100 comprises three vent means 100V in the first end surface 104, between the steel end cap 106 that defines the positive terminal 100P and the shoulder region 100S of the steel cylindrical case 108. The vent means 100V are gaps that are covered by a material that will rupture to allow hot gases to escape through the gaps between the end cap 106 and steel cylindrical case 108 in the event of excessive pressure occurring inside the cell, thereby mitigate against the risk of the cell exploding.

Cells 100 may be grouped together within a housing and electrically connected together by a busbar assembly to create a battery module. Furthermore, as will become apparent from the following description, in some embodiments a plurality of cells 100 may be mechanically joined together to form a group of cells, and a battery module may comprise one or more of such groups of cells.

As will be well understood by the skilled person, abnormal operation of cells in a battery module can lead to the cell undergoing "thermal runaway", which is a self-sustaining exothermal reaction which emits a large volume of gas and debris, and that will typically continue until all of the available fuel within the cell has been consumed by the reaction. However, cell venting means are typically designed to allow hot gases to escape when the temperature and pressure has reached a level which is not necessarily sufficient to initiate thermal runaway. Venting when the conditions within the cell are not yet sufficiently extreme to cause thermal runaway can prevent an abnormal operating condition from progressing into thermal runaway. Accordingly, abnormal operating conditions within cells that lead to venting events may be categorised into those that do and do not ultimately lead to thermal runaway. However, it is generally necessary to design battery modules, in particular traction battery modules, which may comprise hundreds or even thousands of such cylindrical cells, to be able to withstand a cell undergoing thermal runaway. This also ensures that the battery module is able to withstand less severe cell malfunctions that do not lead to thermal runaway.

Vehicle battery modules often comprise a plurality of cylindrical cells 100 of the type shown in figure 1, each having a positive terminal 100P and a negative terminal 100N. The cells are typically located within a housing, and a busbar is provided to connect the cells together in a configuration that provides the required voltage and charge capacity. Should one of the cells in a battery module undergo an abnormal operating condition, such as thermal runaway, it is important that the heat generated by the cell does not cause damage to the other cells. In extreme cases, such damage could lead to a cascade of thermal runaway events ultimately affecting all of the cells in a battery module.

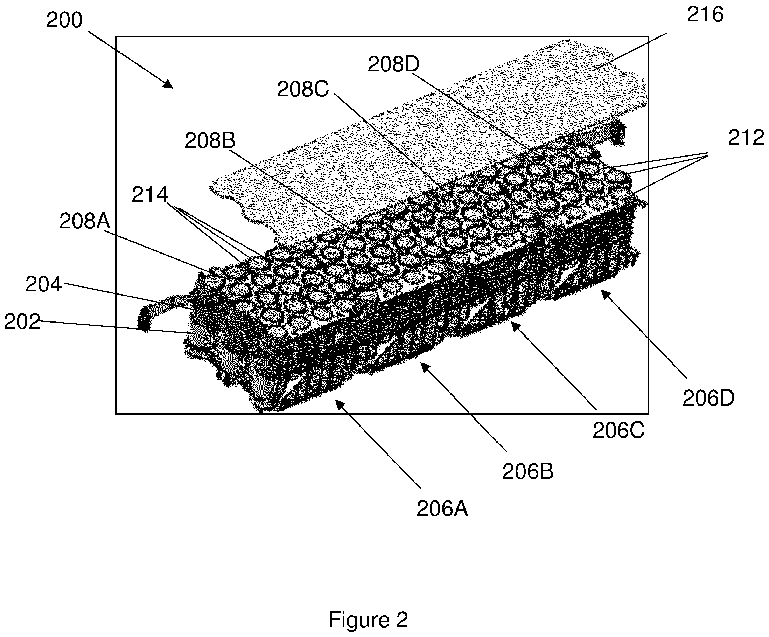

Figure 2 shows a battery module 200 in an embodiment of the present invention. The battery module comprises a plurality of cylindrical cells 100, which are concealed by non-conductive housing components 202, 204 and other components in figure 2. However, it will be understood that the battery module shown in figure 2 comprises five rows of sixteen cells 100 located inside the non-conductive housing components 202, 204, wherein adjacent rows of cells are offset from each other by a distance equal to half the spacing between adjacent cells to optimise packaging efficiency.

In the illustrated embodiment, the cells 100 are split into four groups 206A-D. The cells within each group are electrically connected together in parallel by a respective one of the first busbar components 208A-D, each of which connects all of the positive terminals within the group together, and a respective second busbar component (not shown) which connects all of the negative terminals within the group together. Additional busbar components (not shown) are provided to connect adjacent groups of cells in series. As shown in figure 2, the first busbar components 208A-D are each located adjacent to the first ends of the cells in the respective group. The second busbar components may be located adjacent to the second ends of the cells in the respective groups.

It will be understood that the first busbar components 208A-D and the second busbar components may alternatively be referred to as collection plates. More specifically, the first busbar components 208A-D may be referred to as positive collection plates, because they are electrically connected to all of the positive terminals within a group of cells. Similarly, the second busbar components may be referred to as negative collection plates, because they are electrically connected to all of the negative terminals within a group.

As shown in figure 2, the busbar components 208A-D all have a plurality of circular apertures 212 therethrough. Together with the ends of the cells to which the busbar components are connected, the apertures define a plurality of cavities. A discrete portion of a non-combustible compound 214 is provided in each of the cavities. The compound 214 may be a semi-solid paste. In the illustrated embodiment, the non-combustible compound is a silicone-based caulking compound, although it will be understood that alternative compounds could also be used. In some embodiments, the compound may cure to produce a solid or semi-solid portion. Alternatively, the compound may be a non-curing compound. In either event, the compound will typically be applied to the ends of the cells and will typically adhere thereto. The portions of non-combustible compound 214 are covered by a heat-resistant pad 216, which may be formed from mica, silicone, glass, or any other suitable material. The heat-resistant pad may be provided with a layer of adhesive on one side to facilitate connection of the pad to the busbar components 208. Although not shown in figure 2, in some embodiments the heat-resistant pad may be provided with selectively weakened regions, each weakened region overlying one of the apertures 212. The weakened regions may be provided by perforating an area surrounding the weakened region, by locally reducing the thickness of the pad, or by any other suitable means.

The weakened regions help to ensure that if one of the cells 100 releases vent gases the pad 216 ruptures and does not prevent the gases from passing into a vent volume beyond the pad. However, the pad and portions of non-combustible compound effectively prevent gases that have entered the vent volume from entering the space surrounding the cells, because the pressure within the vent volume is significantly lower than the pressure with which vent gases are released. In this way the pad acts as a means to prevent gases expelled by a venting cell from damaging the other cells within the module. Furthermore, the portions of compound in the cavities adjacent to the non-venting cells effectively support the pad when the pressure in the vent volume is greater than the pressure inside the cavities where the portions of compound 214 are located, thereby helping to prevent rupture of the weakened regions when the pressure in the vent volume is greater than the pressure in the cavity.

The pad and compound also provide significant thermal insulation, so gases in the vent volume are effectively prevented the vent gases from significantly heating the non-venting cells.

As will be well understood by the skilled person, a venting condition occurs when a cell malfunctions and an uncontrolled exothermal reaction takes place within the cell. Such a reaction produces a large quantity of hot gases. It is important that a venting condition in one cell within a battery module does not cause other cells within the module to be heated to an extent that the other cells also undergo venting conditions. The present invention effectively protects non-venting cells by providing a mechanical seal against transport of the vent gases from the vent volume to the space surrounding the cells, and thermal insulation against heat transfer from the vent gases in the vent volume to the non-venting cells. A particular advantage of the present invention is that it does not significantly add to the package volume required for the battery module. This is achieved by providing the non-combustible compound in cavities defined by the busbar and the ends of the cells, which cavities would otherwise be substantially empty. In this way the compound acts as a means to prevent gases expelled by a venting cell from damaging the other cells within the module. Furthermore, securing the non-combustible compound inside the cavities with a pad reduces the amount of the compound that is needed to effectively seal the cells against vent gases in the vent volume.

To effectively prevent vent gases emitted by one of the cells within a battery module from causing the other cells within the module to be heated unacceptably, the inventors have determined that the non-combustible compound should have a thermal conductivity of less than 0.15W/m K, preferably less than 0.10W/m K, and a thermal diffusivity of less than 0.15mm²/sec, preferably less than 0.1mm²/sec. Within the context of the present application, a compound or other component may be taken to be non-combustible if it does not burn even when exposed to high temperatures, for example temperatures greater than 600 degrees C. Preferably, the compound will not burn even when exposed to temperatures greater than 1200 degrees C. The compound may have a UL94 rating of V0.

Because the compound is provided in the vicinity of the cell terminals and the busbar, it should also have suitable dielectric properties. For example, the compound material should preferably be able to withstand 2.7KV across its minimum dimension. Furthermore, the compound must not prevent venting gases from exiting the cell by blocking the vent means during a venting event. Vent gases are typically ejected at a pressure of at least 2 Bar, so if the compound is non-curing then provided its viscosity is not excessively high then it will not prevent the vent gases from passing through it. If the compound does cure, then providing it is not excessively hard then the vent gases will create a aperture through the compound through which they can pass. Suitable compounds include room-temperature vulcanising silicone or other uncured polymerised siloxanes.

Similarly, the inventors have determined that the heat-resistant pad should have a conductivity of less than 0.15W/m K, preferably less than 0.10W/m K, a specific heat of less than 2 J/ g K, preferably less than 1.5J/g K, and a thermal diffusivity of less than 0.15mm²/sec, preferably less than 0.1 mm²/sec. The pad, should also have suitable dielectric properties. For example, the pad should preferably be able to withstand 2.7KV across its minimum dimension. The pad is also preferably non-combustible as per the definition provided above.

In the embodiment shown in figure 2, the portions of non-combustible compound and the pad are only provided on one side of the module 200. This is possible because all of the cells are directed in the same direction, so the vent means on all of the cells are coplanar and directed in the same direction. However, in some embodiments adjacent groups of cells may be inverted relative to one another, which can make creating series connections between the adjacent groups easier, and potentially obviates the need to provide additional busbar components to create the series connections. In such embodiments, the portions of non-combustible compound and a pad may be provided at both ends of the module, so as to cover the vent means at both ends. Accordingly, portions of compound are provided at both the first end and the second end of the cells within the module 200.

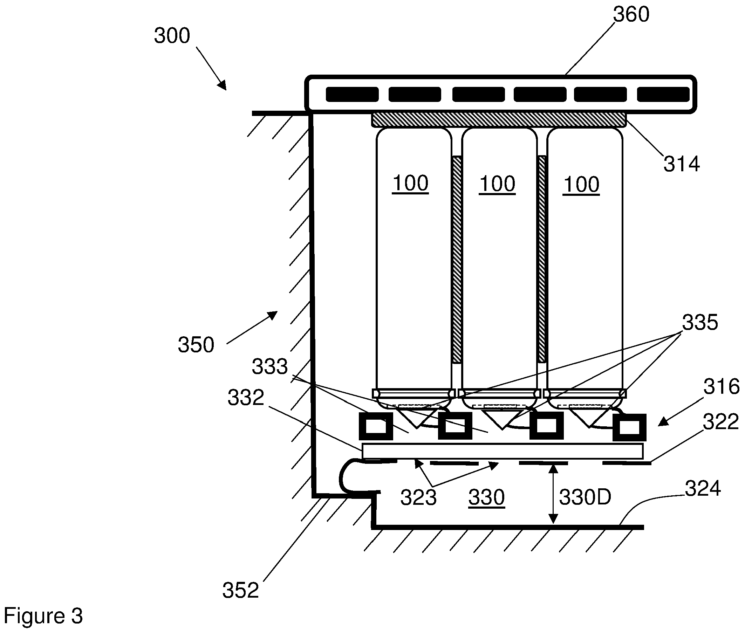

Figure 3 shows a cross section through a battery module 300 in another embodiment of the present invention, which is located in a housing 350.

Battery module 300 comprises a plurality of cylindrical cells 100, of which only three are shown in figure 3. The cells may be 21700 cells as described above with respect to figure 1, although it will be understood that other types of cylindrical cells are equally applicable.

The cells 100 are all cooled at their second end (i.e. the end opposite the positive terminal) by a cooling plate 360, which has one or more enclosed channels therein through which a liquid coolant can flow. A layer of thermal interface material 314 is provided between each of the cells and the cooling plate 360. As will be well understood by the skilled person, the thermal interface material provides an improved thermal connection between the cells 100 and the cooling plate 360, and may also help to mechanically secure the cells to the cooling plate 360.

A single-sided busbar 316 is provided adjacent to the first ends of the cells 100. The busbar 316 comprises a plurality of apertures, each aperture being adjacent to a respective one of the cells 100. Although the structure of the busbar 316 is not shown in detail in figure 3, it will be understood that it comprises positive and negative collection plates, separated from one another by an appropriate insulator or air gap.

The apertures in the busbar and the adjacent cells define a plurality of cavities 333, one of which is adjacent to the first end of each cell. Within each of the cavities 333 is provided a discrete portion of a non-combustible compound 335 similar to that discussed above with respect to figure 2. A heat-resistant pad 332 which covers the cavities 333 and is provided adjacent to the busbar 316.

The heat-resistant pad 332, the cells 100 and the busbar 316 are all supported within the housing 350 on a support component 322, which ensures that a gap is provided between the pad 332 and the lower inside surface 324 of the housing 350. The outside edges of the support component rest on a ledge 352 defined by the inner surface of the housing 350.

The support component 322 is provided with apertures 323 substantially coincident with the first ends of each of the cells 100, which apertures allow vent gases expelled from the cells to pass into the vent volume 330.

The vent volume 330 provides a space in which hot vent gases expelled from a cell undergoing runaway venting event may expand and cool. An exhaust port is provided in the housing 350 to allow gases from the vent volume to escape from the housing, thereby preventing an excessive build-up of pressure within the vent volume 330. Furthermore, the lower surface 324 of the housing 350 may comprise at least part of a bash plate on the underside of the vehicle in which the battery module is installed. As such, the lower surface of the housing may be formed from a sheet of metal having a thickness of between 1-3 mm, and will therefore have a significant thermal mass. Other material thicknesses are useful and will depend on the material chosen for the housing. In the example shown, the housing is formed at least in part from steel. Vent gases entering the vent volume 330 will therefore be cooled to a significant extend when they impinge on the lower inside surface 324 of the housing. The lower surface of the housing may be cooled by air underneath the vehicle, thereby maintaining the cooling effect provided by the lower surface of the housing throughout a cell venting event.

To provide an adequate volume for venting gases to expand and cool, the vent volume 330 may comprise a void, or a vent void, having a depth 330D of at least 1 mm, for example of about 1-20mm. In specific embodiments, the vent void may have a depth of 3-10mm or 4-8mm. In a particular embodiment, the vent void has a depth of 6.6mm. Advantageously, such a depth provides adequate volume for the vent gases to expand and cool, whilst making efficient use of the available space. It will be understood that in the present context, the depth of the vent void refers to dimension along an axis parallel to the longitudinal axes of the cells 100.

Although the portions of compound 335 shown in figure 3 only partially fill the cavities 333, it will be understood that in some embodiments the cavities are substantially filled. It will be understood that the pad 332 and the compound 335 shown in figure 3 may have similar material properties to the corresponding pad 216 and compound 214 described above with respect to figure 2, and that they perform a similar function. However, in the embodiment shown in figure 3, the portions of compound 335 and the pad 332 are only required at one end of the cells, because all of the cells in the module are in a common orientation and therefore have their vent means pointed in the same direction.

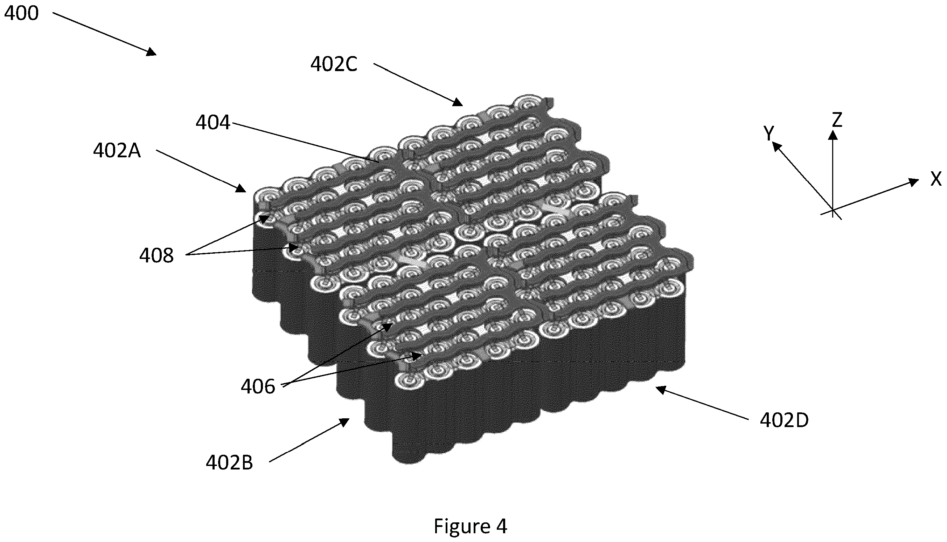

Figure 4 shows a portion of a battery module 400 in another embodiment of the present invention. Battery module 400 comprises four groups of cells 402A-D, and a single-sided busbar assembly 404 that connects the cells within each group in parallel and that connects each group of cells to an adjacent cell in series. However, rather than defining a single cavity adjacent to the first end of each of the cells the busbar assembly 404 is provided with a plurality of apertures 406 and voids 408, each of which covers the first ends of a plurality of the cells. Within the scope of the present specification, a void within a busbar component may be considered to be an area that is within the footprint of the busbar component, but that the busbar component does not cover. Although within the footprint of the busbar component, the voids may not necessarily be surrounded by the busbar component.

Although not shown in figure 4, a discrete portion of a non-combustible compound having the properties described above may be provided adjacent to the first end of each cell. Alternatively, a larger portion of the non-combustible compound may be provided in each aperture and each void covering the first ends of all of the cells that are exposed in the aperture or void. In either case, a heat-resistant pad (also not shown) may be provided to cover the busbar component and the portions of non-combustible compound.

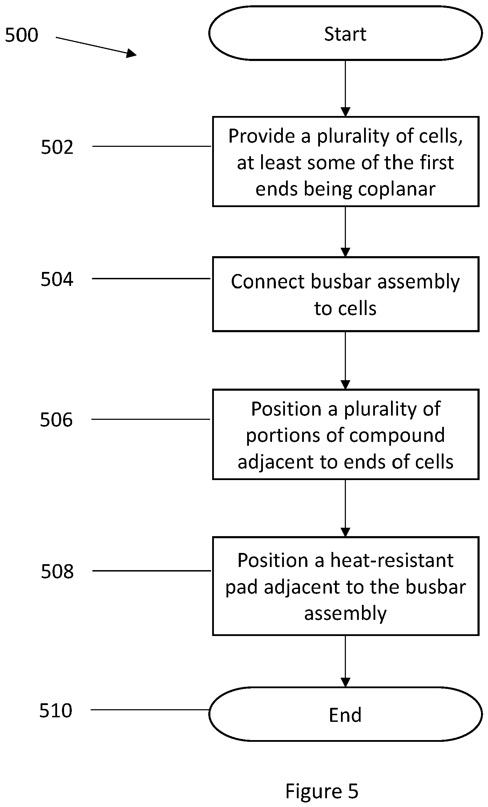

Figure 5 shows a flow chart illustrating a method 500 of manufacture of a battery module in an embodiment of the present invention.

The method begins at step 502, in which a plurality of cylindrical cells are provided with the first ends of at least some of the cells being coplanar. In some embodiments all of the first ends will be coplanar. In other embodiments, the cells will be arranged in groups, wherein the cells in each group have coplanar first ends, but adjacent groups have the cells in opposite orientations.

The method then proceeds to step 504, in which a busbar assembly is connected to the cylindrical cells. At least part of the busbar assembly is located adjacent to the coplanar first ends of the cylindrical cells, and comprises one or more apertures or voids.

Next, in step 506, a plurality of discrete portions of non-combustible compound are placed into the apertures or voids, such that at least some of the portions are adjacent to the first end of at least one cell. It will be understood that in embodiments in which the orientation of the cells alternates between adjacent groups of cells, portions of the non-combustible compound may also be provided adjacent to the second ends of the cells, but this is not essential.

The method then proceeds to step 508, in which a heat-resistant pad is positioned adjacent to the busbar assembly. The pad is preferably adhesive-backed, to facilitate easy connection to the busbar assembly. The method then ends at step 510.

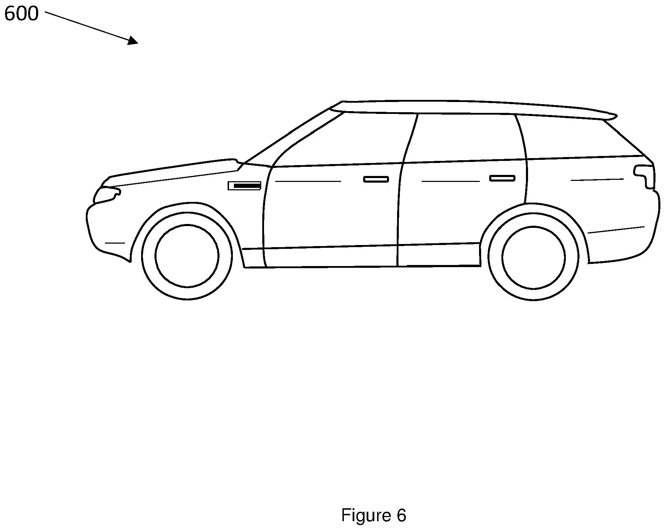

Figure 6 shows a vehicle 600, into which a battery module according to one of the above embodiments, or a battery pack comprising a plurality of such battery modules, can be incorporated.

Within the scope of the claims, all of the features disclosed in this specification (including any abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A battery module (200, 300) comprising:
a plurality of cylindrical cells (100), each of the cylindrical cells (100) having a vent means (100V) located at a first end of the cylindrical cell (100), wherein the first ends of at least some of the cylindrical cells (100) are substantially coplanar;
a busbar assembly, wherein at least a portion of the busbar assembly is located adjacent to the coplanar first ends of the cylindrical cells (100) and wherein the portion of the busbar assembly adjacent to the coplanar first ends comprises a collection plate having one or more apertures or voids (212);
a plurality of discrete portions of a non-combustible compound (214), at least some of the portions each being located within a respective one of the apertures or voids (212) and adjacent to the first end of at least one of the cylindrical cells (100); and
a pad (216) located adjacent to the busbar assembly, wherein the pad (216) at least partially covers the apertures or voids (212).

2. A battery module (200, 300) as claimed in claim 1, wherein the pad (216) is a heat-resistant pad.

3. A battery module (200, 300) as claimed in claim 1 or claim 2, wherein the pad (216) comprises a plurality of weakened regions.

4. A battery module (200, 300) as claimed in claim 3, wherein the plurality of weakened regions are substantially aligned with the apertures.

5. A battery module (200, 300) as claimed in any preceding claim, wherein the pad (216) is formed from mica, silicone or glass.

6. A battery module (200, 300) as claimed in any preceding claim, wherein the non-combustible compound comprises a silicone-based compound.

7. A battery module (200, 300) as claimed in any preceding claim, wherein the non-combustible compound comprises an intumescent compound.

8. A battery module (200, 300) as claimed in any preceding claim, wherein the busbar assembly comprises a respective aperture adjacent to each of the cylindrical cells (100),
wherein a respective cavity is defined by each aperture (212) and the first end of the adjacent cell or a second end of the adjacent cell,
wherein the portions of non-combustible compound are located in the cavities and the pad (216) substantially covers the cavities.

9. A battery module (200, 300) as claimed in any preceding claim, wherein each portion of the non-combustible compound is in contact with one of the cylindrical cells (100) and with the pad (216), whereby the portions of compound at least partially secure the pad (216) to the cylindrical cells.

10. A battery pack comprising a plurality of battery modules (200, 300) as claimed in any preceding claim.

11. A vehicle comprising a battery module (200, 300) as claimed in any one of claims 1-9 or a battery pack as claimed in claim 10.

12. A method of manufacture of a battery module (200, 300) comprising:
providing a plurality of cylindrical cells (100), each having a vent means (100V) located at a first end thereof, arranged such that the first ends of at least some of the cylindrical cells are substantially coplanar;
connecting a busbar assembly to the plurality of cylindrical cells (100), wherein at least a portion of the busbar assembly is located adjacent to the coplanar first ends of the cylindrical cells (100) and wherein the portion of the busbar assembly adjacent to the coplanar first ends comprises a collection plate having one or more apertures or voids (212);
positioning a plurality of discrete portions of non-combustible compound into the apertures or voids (212), at least some of the portions each being located adjacent to the first end of a respective one of the cylindrical cells (100); and
positioning a pad adjacent to the busbar assembly, wherein the pad at least partially covers the apertures or voids (212).

## Patentansprüche

1. Batteriemodul (200, 300), umfassend:
eine Vielzahl von zylindrischen Zellen (100), wobei jede der zylindrischen Zellen (100) ein Entlüftungsmittel (100V) aufweist, das sich an einem ersten Ende der zylindrischen Zelle (100) befindet, wobei die ersten Enden von mindestens einigen der zylindrischen Zellen (100) im Wesentlichen koplanar sind;
eine Sammelschienenanordnung, wobei sich mindestens ein Abschnitt der Sammelschienenanordnung angrenzend an den koplanaren ersten Enden der zylindrischen Zellen (100) befindet und wobei der Abschnitt der Sammelschienenanordnung angrenzend an den koplanaren ersten Enden eine Sammelplatte, die eine oder mehrere Öffnungen oder Hohlräume (212) aufweist, umfasst;
eine Vielzahl von diskreten Abschnitten einer nicht brennbaren Verbindung (214), wobei sich mindestens einige der Abschnitte jeweils innerhalb einer der Öffnungen oder Hohlräume (212) und angrenzend an dem ersten Ende von mindestens einer der zylindrischen Zellen (100) befinden; und
ein Pad (216), das sich angrenzend an der Sammelschienenanordnung befindet, wobei das Pad (216) die Öffnungen oder Hohlräume (212) mindestens teilweise abdeckt.

2. Batteriemodul (200, 300) nach Anspruch 1, wobei das Pad (216) ein hitzebeständiges Pad ist.

3. Batteriemodul (200, 300) nach Anspruch 1 oder 2, wobei das Pad (216) eine Vielzahl von geschwächten Bereichen umfasst.

4. Batteriemodul (200, 300) nach Anspruch 3, wobei die Vielzahl von geschwächten Bereichen im Wesentlichen mit den Öffnungen ausgerichtet ist.

5. Batteriemodul (200, 300) nach einem der vorstehenden Ansprüche, wobei das Pad (216) aus Glimmer, Silikon oder Glas ausgebildet ist.

6. Batteriemodul (200, 300) nach einem der vorstehenden Ansprüche, wobei die nicht brennbare Verbindung eine Verbindung auf Silikonbasis umfasst.

7. Batteriemodul (200, 300) nach einem der vorstehenden Ansprüche, wobei die nicht brennbare Verbindung eine anschwellende Verbindung umfasst.

8. Batteriemodul (200, 300) nach einem der vorstehenden Ansprüche, wobei die Sammelschienenanordnung eine jeweilige Öffnung angrenzend an jeder der zylindrischen Zellen (100) umfasst,
wobei ein jeweiliger Hohlraum durch jede Öffnung (212) und das erste Ende der angrenzenden Zelle oder ein zweites Ende der angrenzenden Zelle definiert ist,
wobei sich die Abschnitte der nicht brennbaren Verbindung in den Hohlräumen befinden und das Pad (216) die Hohlräume im Wesentlichen abdeckt.

9. Batteriemodul (200, 300) nach einem der vorstehenden Ansprüche, wobei jeder Abschnitt der nicht brennbaren Verbindung mit einer der zylindrischen Zellen (100) und mit dem Pad (216) in Kontakt steht, wodurch die Abschnitte der Verbindung das Pad (216) mindestens teilweise an den zylindrischen Zellen sichern.

10. Batteriepack, umfassend eine Vielzahl von Batteriemodulen (200, 300) nach einem der vorstehenden Ansprüche.

11. Fahrzeug, umfassend ein Batteriemodul (200, 300) nach einem der Ansprüche 1 bis 9 oder einen Batteriepack nach Anspruch 10.

12. Verfahren zum Herstellen eines Batteriemoduls (200, 300), umfassend:
Bereitstellen einer Vielzahl von zylindrischen Zellen (100), von denen jede ein Entlüftungsmittel (100V) aufweist, das sich an einem ersten Ende davon befindet, die derart eingerichtet ist, dass die ersten Enden von mindestens einigen der zylindrischen Zellen im Wesentlichen koplanar sind;
Verbinden einer Sammelschienenanordnung mit der Vielzahl von zylindrischen Zellen (100), wobei sich mindestens ein Abschnitt der Sammelschienenanordnung angrenzend an den koplanaren ersten Enden der zylindrischen Zellen (100) befindet und wobei der Abschnitt der Sammelschienenanordnung angrenzend an den koplanaren ersten Enden eine Sammelplatte, die eine oder mehrere Öffnungen oder Hohlräume (212) aufweist, umfasst;
Positionieren einer Vielzahl von diskreten Abschnitten einer nicht brennbaren Verbindung in den Öffnungen oder Hohlräumen (212), wobei sich mindestens einige der Abschnitte jeweils angrenzend an dem ersten Ende einer jeweiligen der zylindrischen Zellen (100) befinden; und
Positionieren eines Pads angrenzend an der Sammelschienenanordnung, wobei das Pad die Öffnungen oder Hohlräume (212) mindestens teilweise abdeckt.

## Revendications

1. Module de batterie (200, 300) comprenant :
une pluralité de cellules cylindriques (100), chacune des cellules cylindriques (100) ayant un moyen de ventilation (100V) situé à une première extrémité de la cellule cylindrique (100), dans lequel les premières extrémités d'au moins certaines des cellules cylindriques (100) sont sensiblement coplanaires ;
un ensemble barre omnibus, dans lequel au moins une partie de l'ensemble barre omnibus est située à côté des premières extrémités coplanaires des cellules cylindriques (100) et dans lequel la partie de l'ensemble barre omnibus adjacente aux premières extrémités coplanaires comprend une plaque de collecte ayant une ou plusieurs ouvertures ou vides (212) ;
une pluralité de parties discrètes d'un composé incombustible (214), au moins certaines des parties étant chacune situées à l'intérieur d'une des ouvertures ou vides (212) respectifs et adjacentes à la première extrémité d'au moins une des cellules cylindriques (100) ; et
un tampon (216) situé à côté de l'ensemble barre omnibus, dans lequel le tampon (216) couvre au moins partiellement les ouvertures ou vides (212).

2. Module de batterie (200, 300) selon la revendication 1, dans lequel le tampon (216) est un tampon résistant à la chaleur.

3. Module de batterie (200, 300) selon la revendication 1 ou la revendication 2, dans lequel le tampon (216) comprend une pluralité de régions affaiblies.

4. Module de batterie (200, 300) selon la revendication 3, dans lequel la pluralité de régions affaiblies est sensiblement alignée avec les ouvertures.

5. Module de batterie (200, 300) selon l'une quelconque revendication précédente, dans lequel le tampon (216) est formé de mica, de silicone ou de verre.

6. Module de batterie (200, 300) selon l'une quelconque revendication précédente, dans lequel le composé incombustible comprend un composé à base de silicone.

7. Module de batterie (200, 300) selon l'une quelconque revendication précédente, dans lequel le composé incombustible comprend un composé intumescent.

8. Module de batterie (200, 300) selon l'une quelconque revendication précédente, dans lequel l'ensemble barre omnibus comprend une ouverture respective adjacente à chacune des cellules cylindriques (100),
dans lequel une cavité respective est définie par chaque ouverture (212) et la première extrémité de la cellule adjacente ou une seconde extrémité de la cellule adjacente,
dans lequel les parties de composé incombustible sont situées dans les cavités et le tampon (216) recouvre sensiblement les cavités.

9. Module de batterie (200, 300) selon l'une quelconque revendication précédente, dans lequel chaque partie du composé incombustible est en contact avec l'une des cellules cylindriques (100) et avec le tampon (216), de sorte que les parties de composé fixent au moins partiellement le tampon (216) aux cellules cylindriques.

10. Bloc-batterie comprenant une pluralité de modules de batteries (200, 300) selon l'une quelconque revendication précédente.

11. Véhicule comprenant un module de batterie (200, 300) selon l'une quelconque des revendications 1 à 9 ou un bloc-batterie selon la revendication 10.

12. Procédé de fabrication d'un module de batterie (200, 300) comprenant :
la fourniture d'une pluralité de cellules cylindriques (100), chacune ayant un moyen de ventilation (100V) situé à une première extrémité de celles-ci, disposées de telle sorte que les premières extrémités d'au moins certaines des cellules cylindriques sont sensiblement coplanaires ;
la liaison d'un ensemble barre omnibus à la pluralité de cellules cylindriques (100), dans lequel au moins une partie de l'ensemble barre omnibus située adjacente à des premières extrémités coplanaires des cellules cylindriques (100) et dans lequel la partie de l'ensemble de barre omnibus adjacente aux premières extrémités coplanaires comprend une plaque de collecte ayant une ou plusieurs ouvertures ou vides (212) ;
le placement d'une pluralité de parties discrètes de composé incombustible dans les ouvertures ou vides (212), au moins certaines des parties étant chacune adjacentes à la première extrémité de l'une respective des cellules cylindriques (100) ; et
le positionnement d'un tampon adjacent à l'ensemble barre omnibus, dans lequel le tampon recouvre au moins partiellement les ouvertures ou vides (212).
